Europäisches Patentamt

European Patent Office

Office européen des brevets

(19)

(11) Veröffentlichungsnummer: **0 085 184**
**B1**

(12) **EUROPÄISCHE PATENTSCHRIFT**

(45) Veröffentlichungstag der Patentschrift:
20.03.85

(51) Int. Cl.⁴: **B 65 G 47/30**

(21) Anmeldenummer: **82112075.5**

(22) Anmeldetag: **28.12.82**

(54) Verfahren und Vorrichtung zum Überführen von in Reihen nebeneinander auf einem Zuförderer aufrecht ankommenden Flaschen in eine einzelne Flaschenreihe auf einem Abförderer.

(30) Priorität: **29.01.82 DE 3202991**

(43) Veröffentlichungstag der Anmeldung:
**10.08.83 Patentblatt 83/32**

(45) Bekanntmachung des Hinweises auf die Patenterteilung:
**20.03.85 Patentblatt 85/12**

(84) Benannte Vertragsstaaten:
**AT BE CH DE FR GB IT LI LU NL SE**

(56) Entgegenhaltungen:
**DE - A - 2 743 885**
**DE - A - 3 004 259**
**DE - A - 3 025 951**
**DE - U - 1 975 166**

(73) Patentinhaber: **KRONES AG Hermann Kronseder Maschinenfabrik, D-8402 Neutraubling (DE)**

(72) Erfinder: **Schneider, Egon, Siemensweg 10, D-8402 Neutraubling (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

## Beschreibung

Die Erfindung bezieht sich auf ein Verfahren zum Überführen von in Reihen nebeneinander auf einem Zuförderer aufrecht ankommenden Flaschen in eine einzelne Flaschenreihe auf einen Abförderer, wobei die Flaschen vom Zuförderer auf einen parallel daneben angeordneten Zwischen- und danach auf einen parallel daneben befindlichen Abförderer abgeleitet und dabei stufenweise in Förderrichtung beschleunigt werden.

In Abfüllanlagen für Flaschen oder ähnlichen Behältern ist es an mehreren Stellen, insbesondere vor schnellaufenden Behandlungsmaschinen wie Inspektionsmaschinen, Füllmaschinen oder Etikettiermaschinen, erforderlich, die mehrreihig mit relativ niedriger Geschwindigkeit nebeneinander geförderten Flaschen auf eine einzige Reihe zusammenzuführen und dabei erheblich zu beschleunigen. Diese Zusammenführungen sind hinsichtlich Lärm und Betriebssicherheit die am meisten problematischen Stellen jeder Abfüllanlage.

Die bekannten Zusammenführungen arbeiten meist mit zwei sich trichterartig verengenden ortsfesten Leitflächen, die den Flaschenstrom zwangsläufig zusammendrängen und auf den schnellerlaufenden einreihigen Abförderer überführen. Eine der beiden Leitflächen ist häufig bewegbar ausgebildet oder in Form eines Rollengeländers od. dgl. gestaltet, wodurch Verklemmungen und Brückenbildungen der Flaschen im Zusammenführungstrichter verhindert werden sollen. Die Transportfunktion dieser bekannten Zusammenführungen ist zwar einigermassen zufriedenstellend, nicht dagegen der enorm hohe Lärmpegel, verursacht durch den hohen Staudruck, wie er zum Hindurchdrücken der Flaschen durch den Trichter unbedingt erforderlich ist.

Es ist durch die DE-OS Nr. 3004259 eine Vorrichtung erläutert, bei der die den Flaschenstrom formierende einzige Leitfläche auf der Bergseite des Zwischenförderers angeordnet ist und der Neigungswinkel ca. 5° beträgt. Die Flaschen werden hierbei ausschliesslich durch die schräg zur Laufrichtung des Förderers verlaufende Leitfläche auf die schnellerlaufenden Abschnitte überführt und dabei allmählich beschleunigt. Der Neigungswinkel von 5° reicht nicht aus, um die Haftreibung zwischen dem Flaschenboden und der Förderfläche zu überwinden bzw. einen wirksamen Hangabtrieb auf die Flaschen einwirken zu lassen. Die Neigung hat allein die Aufgabe, ein Abrollen von liegenden Flaschen zu bewirken, so dass diese unter einer auf der Talseite des Zwischenförderers angeordneten, an der Formierung des Flaschenstroms auf dem Zwischenförderer nicht teilnehmenden weiteren Leitfläche hindurch wegrollen können. Bei dieser bekannten Vorrichtung ist der durch die Form der Leitfläche und die Höhe der Geschwindigkeiten der Förderabschnitte bestimmte Druck der Flaschen untereinander und am Geländer geringer als bei den Vorrichtungen mit zwei sich trichterartig verengenden Leitflächen.

Trotzdem liegt die Schallemission bei dieser bekannten Vorrichtung auch bei mittleren Leistungen immer noch wesentlich über einem gesundheitlich unbedenklichen Lärmpegel.

In der zwischen dem Prioritätstag und Anmeldetag der vorliegenden europäischen Anmeldung veröffentlichten Offenlegungsschrift DE-A Nr. 3025951 ist ebenfalls eine Vorrichtung zum Überführen von in Reihen nebeneinander ankommenden aufrecht stehenden Flaschen in eine einzelne Flaschenreihe geschildert, bei der ein Zuförderer für die in Reihen nebeneinander ankommenden Flaschen sowie ein neben dem Endbereich des Zuförderers beginnender Zwischenförderer und anschliessend ein Abförderer angeordnet sind. Dabei besteht auch hier der Zwischenförderer aus parallelen, nebeneinanderliegenden, zu der Seite des Abförderers hin stufenweise mit höherer Geschwindigkeit angetriebenen Förderabschnitten. Ferner ist der Zwischenförderer zu der Seite des Abförderers hin geringfügig geneigt. Schräg über den Zwischenförderer erstreckt sich auf der höhergelegenen Seite desselben eine Leitfläche, welche die Flaschen quer über den Zwischenförderer abdrängt.

Auch bei dieser Vorrichtung ist der durch die Form der Leitfläche und die Höhe der Geschwindigkeiten der Förderabschnitte bestimmte Druck der Flaschen untereinander und am Geländer geringer als bei den Vorrichtungen mit zwei sich trichterartig verengenden Leitflächen. Ungeachtet dessen ist aber auch bei dieser Vorrichtung die Schallemission selbst bei mittleren Leistungen immer noch so hoch, dass sie gesundheitsschädlich wirkt.

Der Erfindung liegt die Aufgabe zugrunde, bei einer Vorrichtung der eingangs genannten Art ohne Beeinträchtigung der Funktion den Lärmpegel durch primäre Massnahmen spürbar abzusenken.

Zur Lösung dieser Aufgabe gibt die Erfindung ein Verfahren an, bei welchem die Flaschen im Endbereich des schräggestellten Zuförderers quer zur Förderrichtung mittels Hangabtrieb aneinander gedrängt und die Flaschen der untersten Reihe dabei an einem Stützgeländer abgestützt werden, dass dann die Flaschen im Bereich des Zwischenförderers durch gleiches Schrägstellen desselben wie des Zuförderers und durch Zurückweichen des Stützgeländers zum tieferen Bereich des Zwischenförderers hin mittels Hangabtrieb auf den Zwischenförderer gelangen und auf ihm über die stufenweisen Beschleunigungszonen bis zur schnellsten Zone gleiten und so auf Abstand gebracht werden, wobei das Stützgeländer in einer solchen Kurve über den Zwischenförderer geführt wird, dass die unteren Flaschen auch in den Beschleunigungszonen durch Hangabtrieb an das Stützgeländer gedrückt werden, während sich die weiter oben befindlichen und deshalb jeweils etwas später beschleunigten Flaschen infolge Hangabtrieb an den tiefer befindlichen Flaschen abstützen und sich in die Lücken der auf Abstand gebrachten, tiefer befindlichen Flaschen eindrängen.

Somit wird zum Überleiten der Flaschen oder sonstigen Behälter über den Zwischenförderer, d.h. die Beschleunigungszone, keine die Flaschen zwangsweise abdrängende Leitfläche benützt, sondern ausschliesslich der Hangabtrieb. Eine solche Massnahme erschien der Fachwelt bisher unmöglich, weil der Zwischenförderer dabei in beträchtlichem Masse schräggestellt werden muss, um ein sicheres Gleiten der Flaschen auf dieser Fläche zu gewährleisten. Bei einem solchen Schrägstellen lässt sich aber an sich ein Kippen von Flaschen nicht vermeiden.

Es ist zwar bei einer Entpalettiereinrichtung für Flaschen (DE-GM Nr. 1975166) schon versucht worden, die auf einer schräg liegenden Palette stehenden Flaschen in der ganzen Breite der Palette mittels eines Schubbalkens auf eine vor der Palette in der gleichen Schräge angeordnete mehrstufige Transportbahn und einen daneben befindlichen schrägen Tisch überzuschieben und die Flaschen durch den Hangabtrieb frei quer über den Tisch und die Transportbahn gleiten zu lassen, bis sie an einem talwärts gelegenen Seitenführungsband zur Anlage kommen. Die Transportbahn besteht aus vier parallel nebeneinander angeordneten, mit stufenweise unterschiedlichen Geschwindigkeiten angetriebenen Bändern. Beim Überschieben der Flaschen von der Palette auf diese nebeneinander laufenden Transportbänder werden die Flaschen von der Geschwindigkeit des Abschiebers mit einem Ruck auf die entsprechende Transportgeschwindigkeit der Förderbänder beschleunigt, wobei die Flaschen sofort in grossen Lücken auseinandergezogen werden. Am ungünstigsten sind dabei selbstverständlich die Verhältnisse bei dem am tiefsten liegenden Transportband mit angetriebenem seitlichen Führungsband mit der grössten Geschwindigkeit, das bei dieser bekannten Vorrichtung ausserdem auch als Abförderer dient. Die von der Palette im oberen Bereich auf den Tisch übergeschobenen Flaschen gleiten ohne eine Abstützung in diagonaler Richtung bis zum obersten Förderband und werden dort in Transportrichtung ruckartig beschleunigt.

Gemäss der Erfindung ist es überraschenderweise gelungen, die Kippgefahr zu bannen. Dadurch, dass sich die am tiefsten liegende Flaschenreihe bereits im Endbereich des Zuförderers am Geländer abstützt und die anderen Flaschenreihen ihre Abstützung jeweils an der benachbarten Flaschenreihe finden, dass ferner die Flaschen der untersten Flaschenreihe auch in der Beschleunigungszone ihre Abstützung an dem im spitzen Winkel zurückweichenden Stützgeländer finden und die weiter oben befindlichen Flaschen sich infolge des Hangabtriebes an die weiter unten befindlichen Flaschen andrängen, finden alle Flaschen während des Gleitens eine Abstützung.

Zur Durchführung dieses Verfahrens kann gemäss der Erfindung eine Vorrichtung dienen, bei der der Zuförderer in seinem neben dem Zwischenförderer befindlichen Endbereich, der Zwischenförderer und der Abförderer im an den Zwischenförderer anschliessenden Bereich in einem solchen Mass geneigt sind, dass die Flaschen infolge Hangabtrieb über die nebeneinanderliegenden Förderabschnitte des Zwischenförderers gleiten, wobei das talseitige Geländer des Zuförderers im Bereich des Zwischenförderers in die Leitfläche übergeht, die als die Flaschen auf der tieferliegenden Seite des Zwischenförderers abstützende Fläche ausgebildet ist und in das talseitige Geländer des Abförderers mündet.

Als besonders vorteilhaft hat es sich erwiesen, wenn gemäss der Erfindung der Neigungswinkel der Förderflächen des Zwischenförderers, des Zuförderers und des Abförderers gegenüber der Horizontalen etwa 10 bis 12° beträgt.

Im Nachstehenden wird ein Ausführungsbeispiel der Erfindung anhand der Zeichnungen näher erläutert. Dabei zeigen:

Fig. 1 eine schematische Draufsicht auf eine Vorrichtung zum Zusammenführen von Flaschen, und

Fig. 2 einen Schnitt A-B durch die Vorrichtung gemäss Fig. 1.

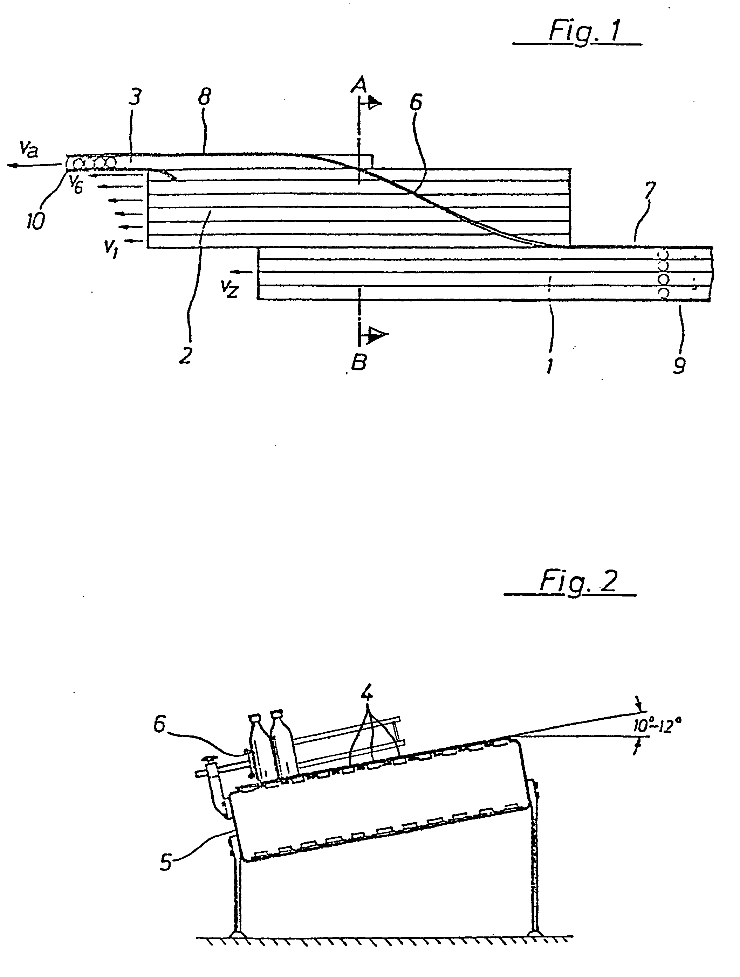

Wie aus Fig. 1 ersichtlich, weist die Vorrichtung einen Zuförderer 1, einen Zwischenförderer 2 und einen Abförderer 3 auf, die alle in bekannter Weise aus Scharnierbandketten 4 bestehen können, die auf einem Maschinenrahmen 5 aufgebaut sind (Fig. 2). Der Zuförderer 1 besteht im gezeichneten Ausführungsbeispiel aus vier nebeneinanderliegenden, mit der gleichen Geschwindigkeit Vz angetriebenen Scharnierbandketten, auf welchem die aufrecht stehenden Flaschen dicht an dicht zugeführt werden, so dass der gesamte Zuförderer 1 auf allen seinen Scharnierbandketten mit aufrecht stehenden Flaschen vollbesetzt sein kann. Auf einer Seite des Zuförderers 1 schliesst sich ein Zwischenförderer 2 an, der parallel zum Zuförderer 1 verläuft.

Im Endbereich des Zwischenförderers 2 ist auf der dem Zuförderer 1 gegenüberliegenden Seite ein Abförderer 3 angeordnet, der aus einer einzigen Scharnierbandkette besteht, die parallel zum Zwischenförderer 2 verläuft und die Flaschen zu einer nicht gezeigten Flaschenbehandlungsmaschine, beispielsweise zu einer Flaschenetikettiermaschine, führt.

Der Zwischenförderer 2 besteht im gezeichneten Ausführungsbeispiel aus sechs unmittelbar nebeneinanderliegenden parallelen Scharnierbandketten 4, die durch eine nicht gezeigte Motorgetriebeeinrichtung mit unterschiedlichen Geschwindigkeiten angetrieben werden. Wie in Fig. 1 durch die Geschwindigkeitspfeile V1 bis V6 gezeigt ist, werden die Scharnierbandketten 4 zum Abförderer 3 hin stufenweise mit jeweils einer höheren Geschwindigkeit bewegt.

Wie die Fig. 2 zeigt, ist die ebene Förderfläche des Zwischenförderers 2 gegenüber der Horizontalen um etwa 10° geneigt und zwar zum Abförderer 3 hin abfallend. In gleicher Weise geneigt ist der Endbereich des Zuförderers 1 und der Anfangsbereich des Abförderers 3, wobei die Förderflächen des Zuförderers 1 mit der Förderfläche des Zwischenförderers 2 und der Förderfläche des Abförderers 3 eine geschlossene ebene Fläche ohne irgendwelche Hindernisse bilden. Der Zuförderer 1 ist auf seiner höhergelegenen Seite durch ein Geländer 9 und auf seiner tiefergelegenen Seite durch ein Stützgeländer 7 begrenzt. Dieses Stützgeländer 7 geht im Bereich des Zwischenförderers 2 in eine Stützschiene 6 stetig über, wobei diese Stützschiene 6 im wesentlichen in einem spitzen Winkel zur Laufrichtung der Scharnierbandketten 4 schräg über den Zwischenförderer 2 hinweg zu dessen tieferliegenden Kante verläuft. Im Endbereich des Zwischenförderers 2 geht die Stützschiene 6 nahtlos, d.h. stetig in ein Stützgeländer 8 des Abförderers 3 über. Der einbahnige Abförderer 3 ist in bekannter Weise auch auf der dem Stützgeländer 8 gegenüberliegenden Seite durch ein Geländer 10 begrenzt, das im Endbereich des Zwischenförderers 2 in einer den Einlauf erweiternden Kurve verläuft.

Der optimale Neigungswinkel für den Zuförderer 1, den Zwischenförderer 2 und den Abförderer 3 beträgt etwa 10 bis 12°, wie in Fig. 2 dargestellt.

Die Geschwindigkeit Vz des Zuförderers 1 ist kleiner als die kleinste Geschwindigkeit V1 des benachbarten Scharnierbandes 4 des Zwischenförderers 2. Jedes jeweils danebenliegende Scharnierband 4 des Zwischenförderers 2 läuft gegenüber dem neben dem Zuförderer 1 liegenden Scharnierband 4 um eine Stufe schneller. Der Abförderer 3 schliesslich wird mit einer noch grösseren Geschwindigkeit betrieben als das mit der Geschwindigkeit V6 angetriebene letzte Scharnierband des Zwischenförderers 2.

Alle Scharnierbänder können auf ihrer Oberseite mit einem Gleitmittel versehen sein, welches die Reibung zwischen den auf den Scharnierbändern stehenden Flaschen und den Bändern verringert.

Auf dem Zuförderer 1 kommen die Flaschen auf den nebeneinander befindlichen Scharnierbandketten in dichter Folge und mit der gleichen Geschwindigkeit Vz an. Mit Rücksicht auf die Neigung des Zuförderers 1 legen sich während des Transportes die auf der tiefsten Scharnierbandkette befindlichen Flaschen am Stützgeländer 7 an, und die auf den benachbarten Scharnierbandketten befindlichen Flaschen stützen sich jeweils an den benachbarten, tieferliegenden Flaschen ab, weil die Flaschen infolge des Hangabtriebes und der Neigung die Tendenz haben, zur tieferliegenden Seite des Zuförderers 1 zu gleiten.

Die auf der tiefsten Scharnierbandkette des Zuförderers 1 befindlichen Flaschen gelangen in den Bereich der Stützschiene 6, die schräg über dem Zwischenförderer 2 zurückweicht, so dass diese Flaschen durch den Hangabtrieb — an der Stützschiene 6 angelehnt — als erste auf die mit der grösseren Geschwindigkeit V1 sich bewegende Scharnierbandkette des Zwischenförderers 2 gelangen und dort infolge der Geschwindigkeitserhöhung auseinandergezogen werden. Diese unterste Flaschenreihe bleibt auch dem weiteren Transportweg an der Stützschiene 6 abgestützt, weil der Hangabtrieb diese Flaschen quer über den Zwischenförderer gleiten lässt, wo sie stufenweise durch jede Scharnierbandkette bis zur Geschwindigkeit V6 der letzten Scharnierbandkette beschleunigt werden. In die dabei entstehenden Lücken zwischen diesen Flaschen drängen sich infolge des Hangabtriebes die weiter oben befindlichen Flaschen, die sich an den unten befindlichen Flaschen abstützen, so dass diese Lücken während der Transportbewegung der Flaschen quer über den Zwischenförderer 2 mit den von oben her nachdrängenden Flaschen ausgefüllt werden, so dass schliesslich im Bereich des Abförderers 3 nur noch eine einzige Flaschenreihe vorhanden ist.

Trotz des verhältnismässig grossen Neigungswinkels des Zuförderers 1, des Zwischenförderers 2 und des Abförderers 3 fallen die aufrecht stehenden Flaschen auch in der Beschleunigungszone auf dem Zwischenförderer 2 nicht um, weil sich die unterste Flaschenreihe stets an der Stützschiene 6 abstützt und die weiter oben befindlichen Flaschen sich infolge des Hangabtriebes an die weiter unten befindlichen Flaschen andrängen und dabei mit einer sanften Kraft sich in die gebildeten Lücken in der untersten Flaschenreihe eindrängen. Dieses Eindrängen wird durch den Umstand begünstigt, dass die auf dem Zwischenförderer 2 weiter oben befindlichen Flaschen jeweils eine geringere Geschwindigkeit aufweisen als die weiter unten befindlichen Flaschen, so dass sich dabei stets eine Geschwindigkeitsdifferenz zwischen den untersten, sich an der Stützschiene 6 abstützenden Flaschen und den benachbarten darüber befindlichen Flaschen ergibt.

Die Geschwindigkeitsverhältnisse zwischen dem Zuförderer 1, dem Zwischenförderer 2 und dem Abförderer 3 sind vorteilhaft so gewählt, dass die Geschwindigkeit der ersten Scharnierbandkette V1 des Zwischenförderers 2 etwa doppelt so gross ist wie die Geschwindigkeit Vz des Zuförderers 1. Die Geschwindigkeit Va des Abförderers kann etwa fünfmal so gross sein wie die Geschwindigkeit Vz des Zuförderers 1.

Die Geschwindigkeiten der anderen Scharnierbandketten des Zwischenförderers 2 erhöhen sich gegenüber der ersten Scharnierbandkette in etwa gleichmässigen Sprüngen, wobei die Geschwindigkeit Va des Abförderers etwa um einen solchen Sprung noch grösser ist als die Geschwindigkeit V6 der schnellsten Scharnierbandkette des Zwischenförderers 2, so dass die auf den Abförderer gelangenden Flaschen etwas auseinandergezogen werden. Dies ist dann besonders günstig, wenn sich am Anfang des Abförderers manche Flaschen noch nicht in die einzige Reihe von Flaschen vollständig eindrängen könnten, was in demjenigen Bereich des Abförderers zu Störungen führen könnte, wo auf beiden Seiten des Abförderers Geländer angebracht sind.

Der Zuförderer 1 und der Zwischenförderer 2 sowie der Abförderer 3 müssen nicht exakt den gleichen Neigungswinkel aufweisen. Es muss nur gewährleistet sein, dass einerseits der Hangabtrieb gross genug ist, um ein Gleiten der Flaschen auf dem Zwischenförderer quer zu seiner Transportrichtung zu bewirken, und dass andererseits ein Umfallen der Flaschen verhindert wird. Die Gefahr des Umfallens ist auf dem Zuförderer 1 und dem Abförderer 3 aus offensichtlichen Gründen geringer.

## Patentansprüche

1. Verfahren zum Überführen von in Reihen nebeneinander auf einem Zuförderer (1) aufrecht ankommenden Flaschen in eine einzelne Flaschenreihe auf einen Abförderer (3), wobei die Flaschen vom Zuförderer auf einen parallel daneben angeordneten Zwischenförderer (2) und danach auf den parallel daneben befindlichen Abförderer abgeleitet und dabei stufenweise in Förderrichtung beschleunigt werden, dadurch gekennzeichnet, dass die Flaschen im Endbereich des schräggestellten Zuförderers (1) quer zur Förderrichtung mittels Hangabtrieb aneinander gedrängt und die Flaschen der untersten Reihe dabei an einem Stützgeländer (7) abgestützt werden, dass dann die Flaschen im Bereich des Zwischenförderers (2) durch gleiches Schrägstellen desselben wie des Zuförderers (1) und durch Zurückweichen des Stützgeländers (6) zum tieferen Bereich des Zwischenförderers (2) hin mittels Hangabtrieb auf den Zwischenförderer (2) gelangen und auf ihm über die stufenweisen Beschleunigungszonen bis zur schnellsten Zone gleiten und so auf Abstand gebracht werden, wobei das Stützgeländer (6) in einer solchen Kurve über den Zwischenförderer (2) geführt wird, dass die unteren Flaschen auch in den Beschleunigungszonen durch Hangabtrieb an das Stützgeländer (6) gedrückt werden, während sich die weiter oben befindlichen und deshalb jeweils etwas später beschleunigten Flaschen infolge Hangabtrieb an den tiefer befindlichen Flaschen abstützen und sich in die Lücken der auf Abstand gebrachten, tiefer befindlichen Flaschen eindrängen.

2. Verfahren nach Anspruch 1, dadurch gekennzeichnet, dass der Abförderer (3) mit einer Geschwindigkeit Va angetrieben wird, die etwa fünfmal so gross ist wie die Geschwindigkeit Vz des Zuförderers (1).

3. Verfahren nach Anspruch 2, dadurch gekennzeichnet, dass der Zwischenförderer (2) in seiner neben dem Zuförderer befindlichen Beschleunigungszone mit einer Geschwindigkeit V1 angetrieben wird, die etwa doppelt so gross ist wie die Geschwindigkeit Vz des Zuförderers (1).

4. Verfahren nach Anspruch 3, dadurch gekennzeichnet, dass die anderen Beschleunigungszonen mit in etwa gleichen Stufen in Richtung Abförderer wachsenden Geschwindigkeiten V2 bis V6 angetrieben werden.

5. Verfahren nach Anspruch 4, dadurch gekennzeichnet, dass der Abförderer (3) mit einer Geschwindigkeit angetrieben wird, die um etwa eine solche Stufe grösser ist als die Geschwindigkeit V6 der benachbarten Beschleunigungszone.

6. Vorrichtung zum Überführen von in Reihen nebeneinander ankommenden, aufrecht stehenden Flaschen in eine einzelne Flaschenreihe, bei der ein Zuförderer (1) mit seitlichem Geländer (9) für die in Reihen nebeneinander ankommenden Flaschen sowie ein neben dem Endbereich des Zuförderers beginnender Zwischenförderer (2) und anschliessend ein Abförderer (3) mit seitlichem Geländer (10) angeordnet sind, wobei der Zwischenförderer aus parallelen, nebeneinander liegenden, zu der Seite des Abförderers hin stufenweise mit höherer Geschwindigkeit angetriebenen Förderabschnitten (4) besteht und insgesamt zur Seite des Abförderers hin quer zur Förderrichtung nach unten geneigt ist, wobei eine Leitfläche (6) schräg über den Zwischenförderer zum Abförderer verläuft, dadurch gekennzeichnet, dass der Zuförderer (1) in seinem neben dem Zwischenförderer (2) befindlichen Endbereich, der Zwischenförderer (2) und der Abförderer (3) im an den Zwischenförderer (2) anschliessenden Bereich in einem solchen Mass geneigt sind, dass die Flaschen infolge Hangabtrieb über die nebeneinanderliegenden Förderabschnitte des Zwischenförderers (2) gleiten, wobei das talseitige Geländer (7) des Zuförderers im Bereich des Zwischenförderers (2) in die Leitfläche (6) übergeht, die als die Flaschen auf der tieferliegenden Seite des Zwischenförderers abstützende Fläche ausgebildet ist und in das talseitige Geländer (8) des Abförderers (3) mündet.

7. Vorrichtung nach Anspruch 6, dadurch gekennzeichnet, dass der Neigungswinkel der Förderflächen des Zwischenförderers (2), des Zuförderers (1) und des Abförderers (3) gegenüber der Horizontalen etwa 10 bis 12° beträgt.

## Revendications

1. Procédé pour transférer des lignes de bouteilles, arrivant côte à côte en position verticale, d'un convoyeur d'alimentation (1) à une ligne unique d'un convoyeur d'enlèvement (3), les bouteilles étant déportées du convoyeur d'alimentation sur un convoyeur intermédiaire (2) parallèle et juxtaposé, puis sur le convoyeur d'enlèvement également parallèle et juxtaposé, avec une accélération progressive dans le sens du transport, caractérisé en ce que les bouteilles arrivant dans la partie extrême du convoyeur d'alimentation (1) incliné sont poussées les unes contre les autres par gravité, avec un mouvement transversal par rapport au sens du transport, les bouteilles de la ligne inférieure s'appuyant alors contre une rampe d'appui (7), et en ce que les bouteilles arrivant dans la zone du convoyeur intermédiaire (2) sont transférées par gravité sur ce dernier, par suite de son inclinaison égale à celle du convoyeur d'alimentation (1) et du recul de la rampe d'appui (6) jusqu'à sa partie la plus basse, y glissent en passant sur des zones d'accélération progressive jusqu'à la section la plus rapide et sont ainsi espacées, la rampe d'appui (6) présentant, sur ce même convoyeur intermédiaire (2), une courbure telle que les bouteilles inférieures y sont également poussées par gravité dans les zones d'accélération, tandis que les bouteilles supérieures, qui sont accélérées avec un léger retard, s'appuient par gravité sur les bouteilles inférieures, entre les espaces desquelles elles s'insèrent.

2. Procédé selon la revendication 1, caractérisé en ce que la vitesse Va du convoyeur d'enlèvement (3) est à peu près égale au quintuple de la vitesse Vz du convoyeur d'alimentation (1).

3. Procédé selon la revendication 2, caractérisé en ce que la vitesse V1 du convoyeur intermédiaire (2), dans sa zone d'accélération directement adjacente au convoyeur d'alimentation, est à peu près deux fois plus élevée que la vitesse Vz de ce dernier convoyeur (1).

4. Procédé selon la revendication 3, caractérisé en ce que les autres zones d'accélération sont entraînées à des vitesses V2 à V6, qui s'élèvent par paliers à peu près égaux dans la direction du convoyeur d'enlèvement.

5. Procédé selon la revendication 4, caractérisé en ce que la vitesse du convoyeur d'enlèvement (3) est à peu près augmentée d'un tel palier par rapport à la vitesse V6 de la zone d'accélération directement adjacente.

6. Dispositif pour transférer des lignes de bouteilles, arrivant côte à côte en position verticale, d'un convoyeur d'alimentation (1) doté d'une rampe latérale (9) à une ligne unique d'un convoyeur d'enlèvement (3), également muni d'une rampe latérale (10), un convoyeur intermédiaire (2), qui commence à côté de la partie extrême du convoyeur d'alimentation, étant suivi par le convoyeur d'enlèvement (3) et se composant de sections de transport (4) parallèles et juxtaposées, entraînées à une vitesse progressive dans la direction du convoyeur d'enlèvement, vers lequel il présente une pente décroissante et transversale au sens du transport, une surface de guidage (6) passant par ailleurs à l'oblique sur ce même convoyeur intermédiaire pour rejoindre le convoyeur d'enlèvement, caractérisé en ce que le convoyeur d'alimentation (1), dans sa partie extrême adjacente au convoyeur intermédiaire (2), ce dernier convoyeur (2) et le convoyeur d'enlèvement (3), dans sa partie prolongeant le convoyeur intermédiaire (2), ont une inclinaison telle que les bouteilles glissent par gravité sur les différentes sections juxtaposées du convoyeur intermédiaire (2), la rampe (7) montée sur le côté aval du convoyeur d'alimentation se prolongeant, dans la zone du convoyeur intermédiaire (2), par la surface de guidage (6) qui sert d'appui pour les bouteilles, sur le côté le plus bas de ce dernier convoyeur, et que prolonge la rampe (8) prévue sur le côté aval du convoyeur d'enlèvement (3).

7. Dispositif selon la revendication 6, caractérisé en ce que les surfaces du convoyeur intermédiaire (2), du convoyeur d'alimentation (1) et du convoyeur d'enlèvement (3) sont inclinées de 10 à 12° environ par rapport à l'horizontale.

## Claims

1. Process for the transfer of bottles arriving upright next to one another in rows on a supply conveyor (1) into a single row of bottles on a delivery conveyor (3), the bottles from the supply conveyor being directed off onto a parallel adjacent intermediate conveyor (2) and subsequently onto the parallel adjacent delivery conveyor, and thereby being accelerated in stages in the conveying direction, characterized in that, in the end region of the inclined supply conveyor (1), the bottles are pushed transversely to the conveying direction up against one another, due to propulsion from the slope, and the bottles of the lowest row are supported in this process against a support railing (7), in that, in the region of the intermediate conveyor (2), the same inclined attitude of the latter as that of the supply conveyor (1) and the giving way of the support railing (6) towards the lower region of the intermediate conveyor (2) cause the bottles to pass onto the intermediate conveyor (2), due to propulsion from the slope, and to slide on it through the staged acceleration zones up to the fastest zone and to be spaced thereby, the support railing (6) being taken in such a curve over the intermediate conveyor (2) that the bottom bottles are either pressed against the support railing (6) by propulsion from the slope also or even in the acceleration zones, while the bottles further up, and therefore each accelerated somewhat later, are supported against the lower bottles, due to propulsion from the slope, and pushed into the gaps between the lower bottles which have been spaced out.

2. Process according to Claim 1, characterized in that the delivery conveyor (3) is driven at a speed Va, which is approximately five times as great as the speed Vz of the supply conveyor (1).

3. Process according to Claim 2, characterized in that the intermediate conveyor (2) is driven in its acceleration zone next to the supply conveyor at a speed V1 which is approximately twice the speed Vz of the supply conveyor (1).

4. Process according to Claim 3, characterized in that the other acceleration zones are driven at speeds V2 to V6, rising in approximately equal stages in the direction of the delivery conveyor.

5. Process according to Claim 4, characterized in that the delivery conveyor (3) is driven at a speed which is approximately greater by such a stage than the speed V6 of the neighbouring acceleration zone.

6. Device for the transfer of upright-standing bottles arriving next to one another in rows into a single row of bottles, in which a supply conveyor (1) with lateral railing (9) for the bottles arriving in rows next to one another and an intermediate conveyor (2) beginning next to the end region of the supply conveyor and, at the end, a delivery conveyor (3) with lateral railing (10) are arranged, the intermediate conveyor consisting of parallel adjacent conveying sections (4), driven at speeds increasing in stages towards the delivery conveyor side, and overall being inclined downwards, transversely to the direction of conveying, towards the delivery conveyor side, a deflector plate (6) running obliquely over the intermediate conveyor to the delivery conveyor, characterized in that the supply conveyor (1), in its end region next to the intermediate conveyor (2), the intermediate conveyor (2) and the delivery conveyor (3) are inclined to such an extent, in the region following on from the intermediate conveyor (2), that the bottles slide over the adjacent conveying sections of the intermediate conveyor (2) due to propulsion from the slope, the bottom-side railing (7) of the supply conveyor merging in the region of the intermediate conveyor (2) into the deflector plate (6), which is designed as the area supporting bottles on the lower-lying side of the intermediate conveyor, and running into the bottom-side railing (8) of the delivery conveyor (3).

7. Device according to Claim 6, characterized in that the angle of inclination of the conveying surfaces of the intermediate conveyor (2), of the supply conveyor (1) and of the delivery conveyor (3) is approximately 10 to 12° with respect to the horizontal.

_Fig. 1_

_Fig. 2_